Europäisches Patentamt

European Patent Office

Office européen des brevets

(11) Veröffentlichungsnummer: **0 145 826**
**B1**

(12) **EUROPÄISCHE PATENTSCHRIFT**

(45) Veröffentlichungstag der Patentschrift: **17.05.89**

(51) Int. Cl.⁴: **F 27 D 1/02**, F 27 D 1/16

(21) Anmeldenummer: **84101199.2**

(22) Anmeldetag: **06.02.84**

(54) **Verfahren und Mittel zum thermischen Isolieren von Gewölben von Industrieöfen.**

(30) Priorität: **30.06.83 BG 61536/83**

(43) Veröffentlichungstag der Anmeldung:
**26.06.85 Patentblatt 85/26**

(45) Bekanntmachung des Hinweises auf die
Patenterteilung:
**17.05.89 Patentblatt 89/20**

(84) Benannte Vertragsstaaten:
**AT BE CH DE FR GB IT LI LU NL SE**

(56) Entgegenhaltungen:
**US-A-2 139 172**
**US-A-2 634 694**
**US-A-2 961 978**

**CHEMICAL ABSTRACTS, Band 96,
Zusammenfassung Nr. 147833q, Columbus,
Ohio, US;
REV. GEN. THERM., Nr. 156, Dezember 1974,
Seiten 953-961, FR.; J. YAN: "Isolation
thermique des fours"
THE GLASS INDUSTRY, Nr. 8, August 1981,
Seiten 12-18; W.F. BRANDT u.a.: "Glass furnace
insulation practices"**

(73) Patentinhaber: **STOPANSKO OBEDINENIE
"QUARZ"
Aksakov Strasse 31
Sofia (BG)**

(72) Erfinder: **Lyutzkanov, Stoyan Stefanov
Komplex Mladost-1 Block 27, Ap. 120
Sofia (BG)**
Erfinder: **Bojkov, Dimiter Kostadinov
21, Trakia Str.
BG-4000 Plovdiv (BG)**

(74) Vertreter: **von Füner, Alexander, Dr. et al
Patentanwälte v. Füner, Ebbinghaus, Finck
Mariahilfplatz 2 & 3
D-8000 München 90 (DE)**

Courier Press, Leamington Spa, England.

**Beschreibung**

Die Erfindung betrifft eine Isolationsmasse und ein Verfahren zum thermischen Isolieren von Industrieofengewölben und auch anderen Ofenteilen, insbesondere von Regenerativkammern der Glasschmelzöfen.

Bekannt sind Verfahren zum thermischen Isolieren von Gewölben bzw. Wänden von Glasschmelzöfen ((1) Brandt, Patel, Thomas, "The Glass Industry", 1981, Nr. 8, 12, (2) Bogum, Glaser, "Glass", 1968, Nr. 6, 254, Nr. 7, 304; (3) Konken, "Amer. Cer. Soc. Bull.", 1971, Nr. 7, 300; (4) Nakajama, Brown, "Glass", 1975, Nr. 2, 236; (5) MacGovern, "Glass Technology", 1972, Nr. 2, 37). Die bekannteste Methode besteht darin, auf dem Ofengewölbe einige Schichten aus Isolierstein getrennt oder in Kombination mit Isolierbeton und Matten aus Faserstoff aufzubringen.

Nach einer anderen Variante werden zur Isolation ausschließlich Faserisolierstoffmatten aufgebracht. Alle diese bekannten Lösungen haben jedoch ihre Nachteile.

Bei der Anwendung von porösen Silikatsteinen wird zwar die Gefahr der Kontaktreaktion mit dem Silikatgewölbe vermieden, dafür jedoch die begrenzte Isolationsfähigkeit der Silikatsteine in Kauf genommen.

Bei der Erhöhung der Schichtdicke der Isolation nimmt die Isolationsfähigkeit nicht proportional zu. Die Wärmeleitzahl solcher Steine wächst stark bei höheren Temperaturen. Die Isolation hat jedoch noch einen anderen gravierenden Nachteil. Beim Durchschlag im Hauptgewölbe stimmt die Lage der Öffnung nicht immer mit dem Durchschlag der Isolation überein. Aus diesem Grund ist der Abbau eines großen Teils der Isolation erforderlich, wenn eine Heißreparatur erfolgen soll (MacGovern, "Glass Technology", 1972, Nr. 2, 37).

Erfolgt die Isolierung mit Faserstoffmatten, so besteht die große Gefahr der Kontaktreaktion mit den Silikatsteinen bei Temperaturen der Zwischenschicht von über 1.000°C. Dies wird auch noch durch das Eindringen von Gemengepulver beschleunigt. Zur Vermeidung dieser Nachteile bringt man eine Pufferschicht aus Zirkonkitt an und bedeckt den Faserstoff mit Aluminiumblechen. Dadurch verteuert sich jedoch die Isolation (Brandt, Patel, Thomas, "The Glass Industry, 1981, Nr. 8, 12).

Als gemeinsamen Nachteil aller oben abgehandelten Vorschläge ist der hohe Preis der Isolation zu sehen.

In der US—PS—2 961 978 wird, um die Lebensdauer eines Gewölbes zu verlängern, das Gewölbe aus dichten und schweren feuerfesten Ziegeln errichtet. Man manuert also beim Stand der Technik ein Gewölbe aus festen Steinen, wobei man dann eine Masse einfüllt, die hohen Temperaturen standhalten muß. Man arbeitet dort mit hängenden Steinen und auch mit Metallbekleidungen, immer das Ziel vor Augen, die Lebensdauer des Gewölbes zu verlängern.

Aufgabe der Erfindung war es nun, eine Isolation zu schaffen, die rißfest ist, leicht aufgebracht und leicht instandgehalten werden kann, wobei man von billigen und allgemein zugänglichen Rohrstoffen auszugehen vermag.

Diese Aufgabe wurde dadurch gelöst, daß eine neue Isoliermasse mit niedriger Wärmeleitzahl, die auch nicht zur Rißbildung neigt, und ausreichende mechanische Festigkeit besitzt, mit einem Gitter aus feuerfesten Isoliersteinen verstärkt wird. Der Vorteil dieser Lösung ist, daß die neue Isoliermasse unter der Einwirkung der Wärmestrahlung des Gewölbes selbst erhärtet. Durch die Armierung mit dem Feuerfeststeingitter werden die Spannungen, die aufgrund der unterschiedlichen Wärmeausdehnungen von Gewölbe und Isoliermaterial entstehen, abgefangen und die Rißbildung vermieden.

Die erfindungsgemäße Isoliermasse enthält die folgenden Komponenten in Gewichtsteilen:

| | |
|---|---|
| Feuerfester formbarer Ton | 20 bis 35 |
| Quarzsand | 2 bis 25 |
| Alumophosphat-Bindemittel | 10 bis 20 |
| Wasser | 25 bis 40 |
| brennbare organische Zusätze | 120 bis 180 Volumenteile, berechnet auf das Gesamtvolumen der obengenannten Bestandteile. |

Gegenstand der Erfindung ist auch ein Verfahren zum thermischen Isolieren von Industrieofengewölben und auch anderen Ofenteilen, das dadurch gekennzeichnet ist, daß man auf der zu isolierenden Fläche ein Gitter aus feuerfesten Isolationssteinen, gegebenenfalls vermittels einer Pufferschicht, aufbringt, und dann die dadurch entstehenden Sektoren mit einer feuerfesten Isoliermasse auffüllt, die folgenden Komponenten in Gewichtsteilen enthält:

| | |
|---|---|
| Feuerfester formbarer Ton | 20 bis 35 |
| Quarzsand | 2 bis 25 |
| Alumophosphat-Bindemittel | 10 bis 20 |
| Wasser | 25 bis 40 |
| brennbare organische Zusätze | 120 bis 180 Volumenteile, berechnet auf das Gesamtvolumen der obengenannten Bestandteile, und anschließend die Isolationsmasse durch die von dem Ofen bzw. den Ofenteilen ausgestrahlte Wärme härtet. |

Nach einer bevorzugten Ausführungsform überzieht man die aus Isolationsmasse und Verstärkungsgitter bestehende Isolationsschicht mit einer Schutzschicht von hoher mechanischer Festigkeit.

Zur Erleichterung der Feststellung von lokalen Überhitzungen kann man auf die Schutzschicht noch eine wärmeempfindliche Schicht auftragen, die ihre Farbe bei Erhöhung der Temperatur ändert.

Zweckmäßigerweise sind die von dem Isoliermaterial aufgefüllten Sektoren rechteckig.

Nach einer bevorzugten Ausführungsform kann außen auf die Isolationsmasse und das Gitter, beides überdeckend, eine Oberflächenschutzschicht mit hoher mechanischer Festigkeit aufgebracht werden.

Zur weiteren Verbesserung der Ofenauskleidung im Hinblick auf die Möglichkeit der Entdeckung von lokalen Überhitzungen kann auf die Oberflächenschutzschicht noch eine wärmeempfindliche Schicht von einigen mm Dicke aufgebracht werden, die ihre Farbe bei der Erhöhung der Temperatur ändert. Dies erlaubt das rechtzeitige Entdecken der lokalen Überhitzung durch das Bedienungspersonal.

Bevorzugt ist es weiterhin, die Armoierungssteine so anzuordnen, daß sie einzelne Sektoren in der Größe von etwa 0,2 bis 1,5 m² bilden.

Es ist weiterhin bevorzugt, daß die Dicke der Isolationsmassenschicht der Höhe des Verstärkungsgitters entspricht, und etwa 6 bis 25 cm beträgt.

Weiterhin ist es bevorzugt, als Pufferschicht zwischen den Steinen des Verstärkungsgitters und dem Gewölbe eine solche Masse aufzubringen, die weder mit dem Gewölbe, d.h. der Ofenwand, noch mit den Isolationssteinen bei Temperaturen bis zu 1400°C reagiert. Die Dicke dieser Schicht soll 5 bis 20 mm betragen.

Nach einer weiteren bevorzugten Ausführungsform soll die Dicke der Oberflächenschutzschicht 10 bis 30 mm betragen und durch eine feuerfeste Masse gebildet werden, die folgende Bestandteile enthält (in Gew.-Teilen):

| | |
|---|---|
| Quarzsand | 40 bis 60 |
| feuerfester formbarer Ton | 8 bis 15 |
| Alumophosphat-Bindemittel | 8 bis 15 |
| Wasser | 20 bis 30 |

Die nach der bevorzugten Ausführungsform aufzubringende wärmeempfindliche Schicht hat folgende Zusammensetzung (in Gew.-Teilen):

| | |
|---|---|
| feuerfester formbarer Ton | 20 bis 30 |
| Alumophosphat-Bindemittel | 30 bis 40 |
| Wasser | 30 bis 40 |

Die einzelnen Sektoren brauchen nicht exakt rechteckig zu sein und auch nicht immer die gleiche Fläche aufweisen.

Die feuerfesten Isoliersteine können auf den zu isolierenden Teilen in üblicher Weise mittels eines Mörtels aufgebracht werden. Es kann jedoch auch die Isoliermasse als entsprechender Mörtel dienen. Wie oben bereits ausgeführt, ist es aus betriebstechnischen Gründen interessant, einfache und billige Trenn- bzw. Verstärkungssteine zu nehmen.

In diesem Falle ist es notwendig, da die die Sektoren bildenden Steine mit dem Ofengewölbe bzw. Wänden an dessen Teilen in Reaktion treten können, eine Pufferschicht aufzubringen, die mit beiden Materialien bei den in Frage kommenden hohen Temperaturen nicht reagiert. Die Dicke dieser Schicht kann 5 bis 20 mm betragen, insbesondere 10 bis 20 mm.

Im Vergleich zu den bekannten Vorschlägen besitzt die vorliegende Erfindung eine Reihe von Vorteilen, wie neben der Vermeidung der Rißbildung der Isolation und dadurch bedingt eine lange Lebensdauer, und in ihrer bevorzugten Variante durch die Möglichkeit der frühen Entdeckung von lokalen Überhitzungen auch eine leichte Bedienbarkeit.

Die Übereinstimmung der Durchschlagstelle im Gewölbe und in der Isolation: Die Anwendung eines Isolierstoffes mit einem niedrigen Wärmeleitkoeffizienten und im Falle der Aufbringung einer Schutzschicht, die Möglichkeit des Betretens des Ofens durch das Bedienungspersonal.

Die beiliegenden Figuren 1 bis 3 erläutern das Wesen der Erfindung. Dabei zeigt Fig. 1 einen Schnitt durch das Gewölbe, Fig. 2 die Draufsicht auf die Isolation nach Fig. 1 und Fig. 3 zeigt einen Schnitt durch die bevorzugte Ausführungsform der Erfindung mit mehrschichtiger Isolation.

In Fig. 1 ist das Gewölbe mit 1 bezeichnet, wobei die ein Gitter bildenden Steine 2 auf dem Gewölbe aufsitzen, gegebenenfalls durch eine dünne Pufferschicht verbunden. Die Zwischenräume sind durch die Isolationsmasse 3 aufgefüllt.

Fig. 2 zeigt in Draufsicht die gleiche Anordnung wie Fig. 1.

In Fig. 3 sind auf dem Gewölbe 1 ebenfalls die das Gitter bildenden Isolationssteine 2, gegebenenfalls über eine Pufferschicht 6 aufgesetzt und von der Isolationsmasse 3 in den Sektoren aufgefüllt. Auf der gemeinsamen Oberfläche von Gittersteinen und Isolationsmasse befindet sich eine Schutzschicht 4. Auf dieser wiederum befindet sich die die lokale Überhitzung anzeigende Schicht 5.

Das Wesen dieser Erfindung soll nun anhand der folgenden zwei Beispiele erläutert werden.

Beispiel 1

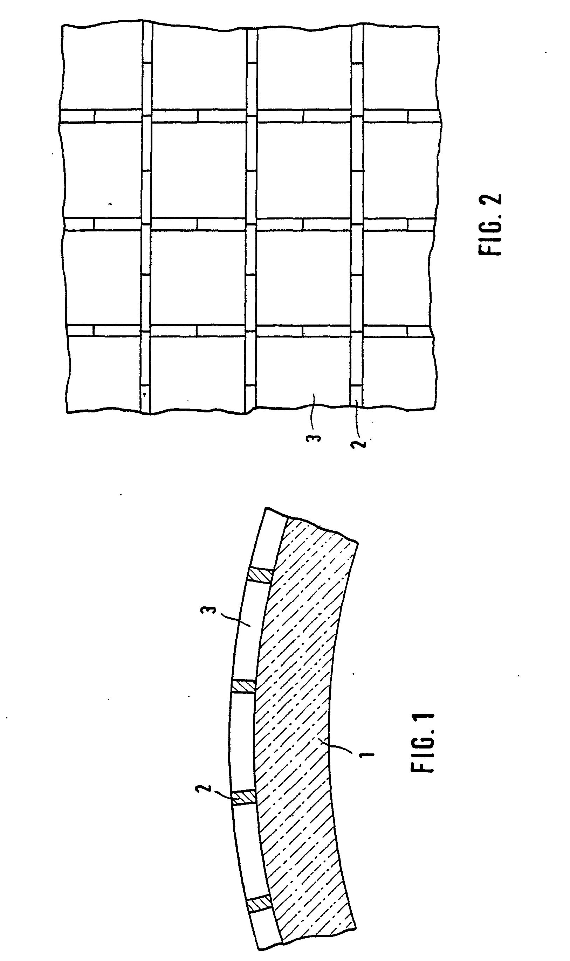

Auf dem aus Silikat bestehenden Gewölbe eines Glasschmelzofens wird ein Gitter aus Alumosilikat-Isolationssteinen in der Art wie in Fig. 2 gezeigt aufgebaut, sodaß die Steine auf ihrer Längskante liegen. Befestigt werden die Steine an dem Gewölbe mit Hilfe eines Mörtels, d.h. einer Pufferschicht, der 45 Gew.-Teile Quarzsand, 20 Gew.-Teile feuerfesten Ton, 10 Gew.-Teile Alumophosphat-Bindemittel und 25 Gew.-Teile Wasser enthält. Zwischen den Steinen des Gitters verbleiben leere Sektoren von 50×75 cm mit einer Höhe von 13 cm, die mit der erfindungsgemäßen neuen Isoliermasse gefüllt werden. Diese Masse hat folgende Zusammensetzung:

| | |
|---|---|
| feuerfester formbarer Ton | 25 Gew.-Teile |
| Quarzsand | 15 Gew.-Teile |
| Alumophosphat-Bindemittel | 20 Gew.-Teile |
| Wasser | 40 Gew.-Teile |

und 150 Vol.-Teile Reisschalen, bezogen auf das Gesamtvolumen der übrigen Komponenten. Die Sektoren werden mit dieser Masse bündig gefüllt, sodaß in den Sektoren keine Hohlräume entstehen.

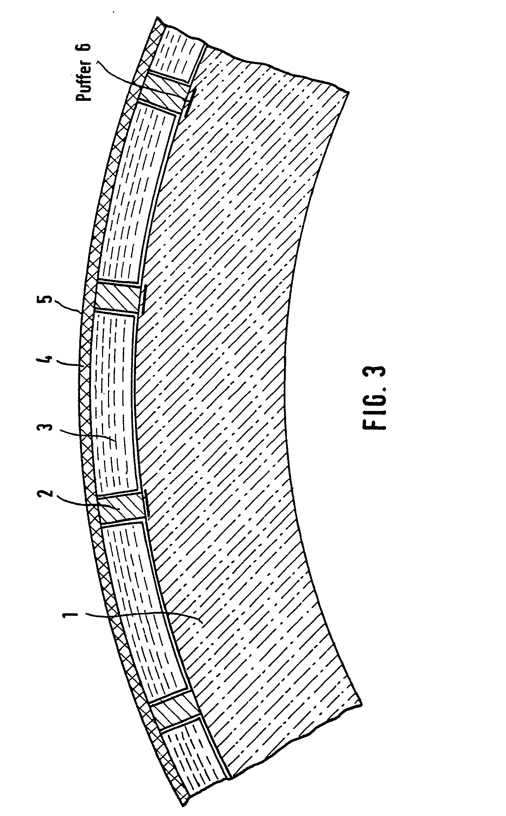

Auf die so hergestellte Isolation wird eine Schutzschicht, die in Fig. 3 mit 4 bezeichnet ist, aufgebracht, die folgende Zusammensetzung aufweist:

| | |
|---|---|
| Quarzsand | 55 Gew.-Teile |
| feuerfester Ton | 10 Gew.-Teile |
| Alumophosphat-Bindemittel | 15 Gew.-Teile |
| Wasser | 20 Gew.-Teile. |

Die Dicke der Schicht beträgt zwischen 10 und 20 mm. Die Bindung der Schicht sowohl mit den das Gitter bildenden Steinen, als auch mit der Isolationsmasse ist gut, sodaß die Gefahr von schädlichen Kontaktreaktionen zwischen Mauerwerk und Isolationsmasse vermieden wird.

Über Nacht wird der Aufbau ruhen gelassen und am nächsten Tag die gesamte Oberfläche mit einer dünnen Schicht von bis zu 1 mm durch Spritzen oder Streichen mit Walzen versehen, wobei die aufzubringende Masse folgende Zusammensetzung hat:

| | |
|---|---|
| Ton | 25 Gew.-Teile |
| Alumophosphat-Bindemittel | 40 Gew.-Teile |
| Wasser | 35 Gew.-Teile. |

Dies ist die in Fig. 3 mit 5 bezeichnete, die lokale Überhitzung anzeigende Schicht. Nach Fertigstellung des Schichtenaufbaus erfolgt das Anheizen des Ofens und die Aushärtung.

Beispiel 2

Auf das Gewölbe einer Regenerativkammer eines Glasschmelzofens, der mit Magnesit-Chromit-Steinen ausgefüllt ist, wird ein Gitter aus Alumosilikat-Isolationssteinen aufgebaut. Die Befestigung dieser Steine erfolgt mit Hilfe eines einfachen Schamottmörtels. Die zwischen den Steinen des Gitters verbleibenden leeren Sektoren in der Größe von 50×100 cm und 25 cm Höhe werden mit der erfindungsgemäßen Isoliermasse von folgender Zusammensetzung gefüllt:

| | |
|---|---|
| feuerfester formbarer Ton | 25 Gew.-Teile |
| Quarzsand | 5 Gew.-Teile |
| Alumophosphat-Bindemittel | 25 Gew.-Teile |
| Wasser | 40 Gew.-Teile |

und 150 Vol.-Teile Reisschalen, bezogen auf das Gesamtvolumen der anderen Komponenten.

Im folgenden wird in gleicher Weise wie in Beispiel 1 verfahren. Die so aufgebaute Isolierung erfüllt voll und ganz die in sie gestellte Erwartung.

**Patentansprüche**

1. Isolationsmasse für die Isolierung von Gewölben von Industrieöfen, dadurch gekennzeichnet, daß sie folgende Komponenten in Gewichtsteilen enthält:

| | |
|---|---|
| feuerfester formbarer Ton | 20—25 |
| Quarzsand | 2—25 |
| Alumophosphat-Bindemittel | 10—20 |
| Wasser | 25—40 |
| brennbare organische Zusätze | 120—180 Volumenteile berechnet auf das Gesamtvolumen der obengenannten Bestandteile. |

2. Verfahren zum thermischen Isolieren von Industrieofengewölben und auch anderen Ofenteilen, wobei man auf der zu isolierenden Fläche ein Gitter aus feuerfesten Isolationssteinen, gegebenenfalls vermittels einer Pufferschicht, aufbringt, dann die dadurch entstehenden Sektoren mit einer feuerfesten Isolationsmasse auffüllt, die folgende Komponenten in Gewichtsteilen enthält:

| | |
|---|---|
| feuerfester formbarer Ton | 20—35 |
| Quarzsand | 2—25 |
| Alumophosphat-Bindemittel | 10—20 |
| Wasser | 25—40 |
| brennbare organische Zusätze | 120—180 Volumenteile berechnet auf das Gesamtvolumen der obengenannten Bestandteile, und anschließend die Isolationsmasse durch die von dem Ofen bzw. den Ofenteilen ausgestrahlte Wärme härtet. |

3. Verfahren nach Anspruch 2, dadurch gekennzeichnet, daß man die aus Isolationsmasse und Verstärkungsgitter bestehende Isolationsschicht mit einer weiteren Schutzschicht von hoher mechanischer Festigkeit überzieht.

4. Verfahren nach Anspruch 3, dadurch gekennzeichnet, daß man auf die Schutzschicht von hoher mechanischer Festigkeit noch eine wärmeempfindliche Schicht aufträgt, die ihre Farbe bei Erhöhung der Temperatur ändert.

5. Verfahren nach einem der Ansprüche 2 bis 4, dadurch gekennzeichnet, daß man die feuerfesten Isolationssteine als Begrenzung von rechteckigen Sektoren setzt.

6. Verfahren nach einem der Ansprüche 2 bis 5, dadurch gekennzeichnet, daß man die Isolationssteine so anordnet, daß die einzelne Sektoren in der Größe von etwa 0,2 bis 1,5 m² begrenzen.

7. Verfahren nach einem der Ansprüche 2 bis 6, dadurch gekennzeichnet, daß man die Isolationsmasse in die leeren Sektoren so einfüllt, daß sie der Höhe des aus den Isolationssteinen gebildeten Verstärkungsgitters entspricht und etwa 6 bis 25 cm beträgt.

8. Verfahren nach einem der Ansprüche 2 bis 7, dadurch gekennzeichnet, daß man eine Pufferschicht zwischen den feuerfesten Isolationssteinen und dem Gewölbe bzw. der Ofenwand oder den Ofenteilen aufbringt, die weder mit diesen noch mit den Isolationssteinen bei Temperaturen bis zu 1.400°C reagiert und vorzugsweise eine Schichtdicke von 5 bis 20 mm besitzt.

9. Verfahren nach Anspruch 8, dadurch gekennzeichnet, daß man die Pufferschicht in einer Dicke von 10 bis 20 mm aufbringt.

10. Verfahren nach einem der Ansprüche 3 bis 9, dadurch gekennzeichnet, daß die Oberflächenschutzschicht aus einer Masse erhalten wird, die folgende Bestandteile in Gewichtsteilen enthält:

| | |
|---|---|
| Quarzsand | 40—60 |
| feuerfester formbarer Ton | 8—15 |
| Alumophosphat-Bindemittel | 8—15 |
| Wasser | 20—30 |

11. Verfahren nach einem der Ansprüche 4 bis 10, dadurch gekennzeichnet, daß man zum Erhalt der wärmeempfindlichen Schicht eine Zusammensetzung in Gewichtsteilen von

| | |
|---|---|
| feuerfestem formbaren Ton | 20—30 |
| Alumophosphat-Bindemittel | 30—40 |
| Wasser | 30—40 |

aufbringt.

**Revendications**

1. Masse isolante pour l'isolation de voûtes de fours industriels, caractérisée par le fait qu'elle renferme les composants suivants, en parties en poids:—

| | |
|---|---|
| Argile plastique réfractaire | 20—35 |
| Sable siliceux | 2—25 |
| Liant du type alumophosphate | 10—20 |
| Eau | 25—40 |
| Additifs organiques combustibles | 120—180 parties en volume calculées sur la base du volume total des constituants susindiqués. |

2. Procédé d'isolation thermique de voûtes de fours industriels ainsi que d'autres parties de four, suivant lequel on applique sur la surface à isoler une grille de pierres isolantes réfractaires, éventuellement

EP 0 145 826 B1

au moyen d'une couche tampon, puis on remplit les secteurs en résultant avec une masse isolante réfractaire, qui renferme les composants suivants, en parties en poids:—

| | |
|---|---|
| Argile plastique réfractaire | 20—35 |
| Sable siliceux | 2—25 |
| Liant du type alumophosphate | 10—20 |
| Eau | 25—40 |
| Additifs organiques combustibles | 120—180 parties en volume calculées sur la base du volume total des constituants susindiqués, puis on fait durcir la masse isolante par la chaleur émise par le four ou les parties du four. |

3. Procédé selon la revendication 2, caractérisé par le fait qu'on recouvre la couche isolante se composant de la masse isolante et de la grille de renforcement, par une autre couche de protection de résistance mécanique élevée.

4. Procédé selon la revendication 3, caractérisé par le fait qu'on applique sur la couche de protection de résistance mécanique élevée encore une couche thermosensible, qui change de couleur lors de l'élévation de la température.

5. Procédé selon l'une des revendications 2 à 4, caractérisé par le fait qu'on place les pierres isolantes réfractaires comme délimitation de secteurs rectangulaires.

6. Procédé selon l'une des revendications 2 à 5, caractérisé par le fait qu'on dispose les pierres isolantes de telle sorte qu'elles délimitent des secteurs individuels d'une dimension d'environ 0,2 à 1,5 m². 

7. Procédé selon l'une des revendications 2 à 6, caractérisé par le fait qu'on remplit de masse isolante les secteurs vides, de telle sorte que sa hauteur corresponde à celle de la grille de renforcement formée par les pierres isolantes et s'élève à environ 6 à 25 cm.

8. Procédé selon l'une des revendications 2 à 7, caractérisé par le fait qu'on applique une couche tampon entre les pierres isolantes réfractaires et la voûte ou la paroi du four ou les parties du four, qui réagit ni avec celles-ci ni avec les pierres isolantes à des températures allant jusqu'à 1400°C et qui possède, de préférence, une épaisseur de couche de 5 à 20 mm.

9. Procédé selon la revendication 8, caractérisé par le fait qu'on applique la couche tampon sur une épaisseur allant de 10 à 20 mm.

10. Procédé selon l'une des revendications 3 à 9, caractérisé par le fait que la couche de protection de surface est obtenue à partir d'une masse qui renferme les constituants suivants, en parties en poids:

| | |
|---|---|
| Sable siliceux | 40—60 |
| Argile plastique réfractaire | 8—15 |
| Liant de type alumophosphate | 8—15 |
| Eau | 20—30 |

11. Procédé selon l'une des revendications 4 à 10, caractérisé par le fait que, pour obtenir la couche thermosensible, on applique une composition comprenant, en parties en poids de:

| | |
|---|---|
| Argile plastique réfractaire | 20—30 |
| Liant de type alumophosphate | 30—40 |
| Eau | 30—40 |

## Claims

1. Insulating material for the insulation of vaulted roofs of industrial furnaces, characterised in that it contains the following components in parts by weight:

| | |
|---|---|
| mouldable refractory clay | 20 to 35 |
| quartz sand | 2 to 25 |
| aluminophosphate binder | 10 to 20 |
| water | 25 to 140 |
| combustible organic additives | 120 to 180 parts by volume calculated on the total volume of the above-indicated constituents. |

2. Process for the thermal insulation of vaulted roofs of industrial furnaces and other parts of furnaces, wherein a lattice of refractory insulating bricks is applied to the surface to be insulated, optionally with the intermediate positioning of a buffer layer, then the sectors resulting thereby are filled up with a refractory insulating material which contains the following components in parts by weight:

| mouldable refractory clay | 20 to 35 |
| quartz sand | 2 to 25 |
| aluminophosphate binder | 10 to 20 |
| water | 25 to 40 |
| combustible organic additives | 120 to 180 parts by volume calculated on the total volume of the above-indicated constituents, and then the insulating material is hardened by heat radiated from the furnace or furnace parts. |

3. Process according to claim 2, characterised in that the insulating layer consisting of insulating material and reinforcing lattice is covered with a further protective layer of high mechanical strength.

4. Process according to claim 3, characterised in that a thermally sensitive layer which changes its colour on increasing of temperature is applied to the protective layer of high mechanical strength.

5. Process according to one of claims 2 to 4, characterised in that the refractory insulating bricks are laid as boundary of rectilinear sectors.

6. Process according to one of claims 2 to 5, characterised in that the insulating bricks are so arranged that they limit individual sectors to a size of about 0.2 to 1.5 m$^2$.

7. Process according to one of claims 2 to 6, characterised in that the insulating material so fills the empty sectors that it corresponds to the height of the reinforcing lattice formed from the insulating bricks and amounts to about 6 to 25 cm.

8. Process according to one of claims 2 to 7, characterised in that a buffer layer is applied between the refractory insulating bricks and the vaulted roof or the furnace wall or the furnace part, which react neither with this nor with the insulating bricks at temperatures up to 1400°C and preferably possesses a layer thickness of 5 to 20 mm.

9. Process according to claim 8, characterised in that the buffer layer is applied in a thickness of 10 to 20 mm.

10. Process according to one of claims 3 to 9, characterised in that the surface protecting layer is obtained from a material which contains the following constituents in parts by weight:

| quartz sand | 40 to 60 |
| mouldable refractory clay | 8 to 15 |
| aluminophosphate binder | 8 to 15 |
| water | 20 to 30 |

11. Process according to one of claims 4 to 10, characterised in that, for obtaining the thermally sensitive layer, there is applied a composition, in parts by weight, of

| mouldable refractory clay | 20 to 30 |
| aluminophosphate binder | 30 to 40 |
| water | 30 to 40 |

FIG. 1

FIG. 2

EP 0 145 826 B1

FIG. 3

Puffer 6